# EUROPÄISCHE PATENTSCHRIFT

(11) **EP 3 093 103 B1**
(45) Veröffentlichungstag und Bekanntmachung des Hinweises auf die Patenterteilung: **12.07.2017**
(21) Anmeldenummer: 15167238.3
(22) Anmeldetag: 12.05.2015
(51) Int. Cl.: B23Q 1/76

(54) **LÜNETTE**
STATIONARY SUPPORT
LUNETTE

(43) Veröffentlichungstag der Anmeldung: 16.11.2016
(73) Patentinhaber: SMW-Autoblok Spannsysteme GmbH, 88074 Meckenbeuren (DE)
(72) Erfinder: Maurer, Eckhard, 88094 Oberteuringen (DE)
(74) Vertreter: Engelhardt & Engelhardt

(56) Entgegenhaltungen:
- EP-A1- 0 500 405
- US-H- H45

## Beschreibung

Die Erfindung bezieht sich auf eine Lünette nach dem Oberbegriff des Patentanspruches 1.

Solche Lünetten sind beispielsweise aus der EP 2848359 A1 zu entnehmen, durch die ein rotationssymmetrisches Werkstück im Raum zentriert gehalten und abgestützt ist. Solche Werkstücke sind Wellen oder Hohlkörper, deren Außenmantelfläche mittels Werkzeugen zu bearbeiten ist, wodurch erhebliche Bearbeitungskräfte entstehen, die auf das eingespannte Werkstück einwirken und dieses durchbiegen. Oftmals sind solche Werkstücke mehrere Meter lang, so dass die zur Abstützung der Werkstücke erforderlichen Lünetten in einem vorgegebenen Abstand zueinander im Bereich des Werkzeugbettes einer Werkzeugmaschine angeordnet sind.

Aus der EP 0500405 A1 ist eine Einrichtung zum Klemmen und Greifen bekannt geworden, die einen ersten Kolben und einen zweiten Kolben aufweist, wobei der erste Kolben einer Zwischenbacke zugeordnet ist und der zweite Kolben den äußeren Backen zugeordnet ist. Die äußeren Backen sind somit zur Arretierung des zu greifenden Gegenstandes mittels des zweiten Druckkolbens zustellbar.

Eine weitere derartige Greifvorrichtung ist der US H 45 H zu entnehmen. Eine erster und ein zweiter Druckkolben sind dabei in Reihe geschaltet, wobei der erste Druckkolben mit den beiden äußeren Spannbacken und dem zweiten Druckkolben gekoppelt ist und der zweite Druckkolben mit der mittleren Spannbacke gekoppelt ist.

Nachteilig an diesem Stand der Technik und insbesondere bei Greifvorrichtungen ist, dass die drei Spannbacken nicht synchron durch die Druckkolben verfahren sind und eine Zentrierung, die für die Bearbeitung hoch präziserer rotationssymmetrischer Werkstücke unbedingt erforderlich ist, nicht erfolgt.

Das Werkzeugbett einer Werkzeugmaschine stellt jedoch einen begrenzten Raum zur Verfügung, der mit weiteren Elementen zu bestücken ist, so dass die Bauraumgröße der Lünette an das zur Verfügung stehende Platzangebot der Werkzeugmaschine anzupassen ist. Darüberhinaus sind die Lünetten entweder in vertikaler Richtung oder seitlich geringfügig versetzt zu dieser auszurichten, um das zu haltende Werkstück von unten zu umfassen und zu zentrieren.

Die Lünetten bestehen zu diesem Zweck im Wesentlichen aus zwei Gehäuseschalen, in denen drei Lünettenarme beweglich angeordnet sind. Die Lünettenarme stehen in einer trieblichen Wirkverbindung mit einem pneumatisch oder hydraulisch betriebenen Druckkolben, durch den die drei Lünettenarme synchron mittels eines Führungsschlittens in Richtung des einzuspannenden Werkstückes oder von diesem weg bewegbar sind.

Der mittlere Lünettenarm wird demnach axial hin- und herverfahren und die zwei äußeren Lünettenarme liegen an der Außenseite des Führungsschlittens auf und führen eine schwenkbare Bewegung bei der Betätigung des Führungsschlittens aus. An zwei gegenüberliegenden Außenseiten des Führungsschlittens ist nämlich eine Steuerbahn angearbeitet, auf denen jeweils einer an den freien Enden des äußeren Lünettenarms angeordnete Laufrollen aufliegen und auf der Steuerbahn abrollt. Durch die Zustellung des Führungsschlittens werden demnach die beiden äußeren Lünettenarme, die drehbar an den Gehäuseschalen gelagert sind, in Richtung des Werkstückes zugestellt bzw. geschwenkt.

Sobald die drei Lünettenarme gleichzeitig auf die Werkzeugoberfläche auftreten, entstehen Spannkräfte, durch die das Werkstück gehalten ist. Diese Spannkräfte sowie die Bewegungen der drei Lünettenarme ist mittels des einstückig ausgestalteten Betätigungskolbens erreicht. Aufgrund der einstückigen Ausbildung des Betätigungskolbens ragt dieser aus der von den Gehäuseschalen gebildeten Ebene heraus, um den optimalen bzw. maximalen Zustellweg oder Hubweg zu erreichen, so dass der axiale Zustellweg bzw. der Verschwenkbereich der drei Lünettenarme möglichst groß bemessen ist. Je größer der Durchmesser eines einzuspannenden Werkstückes ausfällt, desto länger ist der Weg, den der Betätigungskolben zurückzulegen hat zu bemessen.

Da jedoch in einer Werkzeugmaschine lediglich ein begrenzter Bauraum zur Verfügung steht, der im Wesentlichen durch das Werkzeugmaschinenbett und den Verlauf des einzuspannenden Werkstückes vorgegeben ist, können die zur Verfügung gestellten Lünetten lediglich eine bestimmte Größe von Werkstücken einspannen.

Es ist daher Aufgabe der Erfindung eine Lünette der eingangs genannten Gattung derart weiterzubilden, dass unter Beibehaltung des möglichst groß bemessenen Verstellweges des Betätigungskolbens möglichst groß ausgestaltete Werkstücke durch die Lünette im Raum zentriert werden können, ohne dass der Verstellweg des Betätigungskolbens durch die Vergrößerung des Werkstückes vergrößert ist.

Weitere vorteilhafte Weiterbildungen der Erfindung ergeben sich aus den Unteransprüchen.

Dadurch, dass der Betätigungskolben aus einem ersten Teil und einem zweiten Teil besteht, die teleskopartig und relativ zueinander verschiebbar gelagert sind, dass jedem Teil des Betätigungskolbens ein Druckraum bzw. zugeordnet ist und dass in jedem Druckraum eine Leitung mündet, durch die ein Druckmedium in den jeweiligen Druckraum einpressbar bzw. entleerbar ist, ist vorteilhafterweise erreicht, dass der Verstellweg des Betätigungskolbens zumindest außerhalb der von den Gehäuseschalen gebildeten Gehäusebene begrenzt ist, ohne dass der Hubweg des Betätigungskolbens eingeschränkt ist, so dass auch Werkstücke mit einem groß bemessenen Durchmesser durch die erfindungsgemäße Lünette einspannbar und im Raum zentrierbar sind.

Aufgrund der teleskopartigen Ausgestaltung des Betätigungskolbens in zumindest einen und zwei Zustellkolben ist gewährleistet, dass die Größe der einzuspannenden Werkstücke an den Hubweg des Betätigungskolbens variabel einstellbar ist, denn die den jeweiligen Zustellkolben zugeordneten Druckräume können individuell, also einzeln mit einem Druckmedium befüllt bzw. entleert werden, so dass wahlweise der erste und/oder der zweite Zustellkolben des Betätigungskolbens bewegbar sind.

Der Verstellweg des Betätigungskolbens wird demnach nicht außerhalb der von den Gehäuseschalen gebildeten Ebene erreicht, sondern erfolgt nahezu vollständig im Inneren der von dem Betätigungskolben gebildeten Druckräumen. Folglich kann der von der Werkzeugmaschine vorgegebene Bauraum optimal ausgenutzt werden und die Verstellmöglichkeit der Lünette ist erheblich vergrößert.

Es ist besonders vorteilhaft, wenn Teile des Betätigungskolbens in dem Lünettengehäuse integriert sind und in dieses eintauchen, denn dadurch ist erreicht, dass die Länge des Betätigungskolbens zumindest teilweise innerhalb des Lünettengehäuses untergebracht ist.

In der Zeichnung ist ein erfindungsgemäßes Ausführungsbeispiel einer Lünette dargestellt, die nachfolgend näher erläutert ist. Im Einzelnen zeigt:
- Figur 1: eine Lünette mit zwei Gehäuseschalen, zwischen denen ein Betätigungskolben angeordnet ist, der aus zwei Teilen besteht, die teleskopartig ineinander verschiebbar gelagert sind, mit drei Lünettenarmen, die trieblich mit dem Betätigungskolben verbunden sind und durch diesen zur Einspannung eines Werkstückes bewegbar sind an einem Werkzeugbett einer Werkzeugmaschine, im Schnitt,
- Figur 2a: den Betätigungskolben, bestehend aus einem ersten und einem zweiten Zustellkolben, gemäß Figur 1, in vergrößerter Darstellung in der Ausgangsposition,
- Figur 2b: den Betätigungskolben gemäß Figur 2a, in einer mittleren Position und
- Figur 2c: den Betätigungskolben gemäß Figur 2a, in einer Endposition.

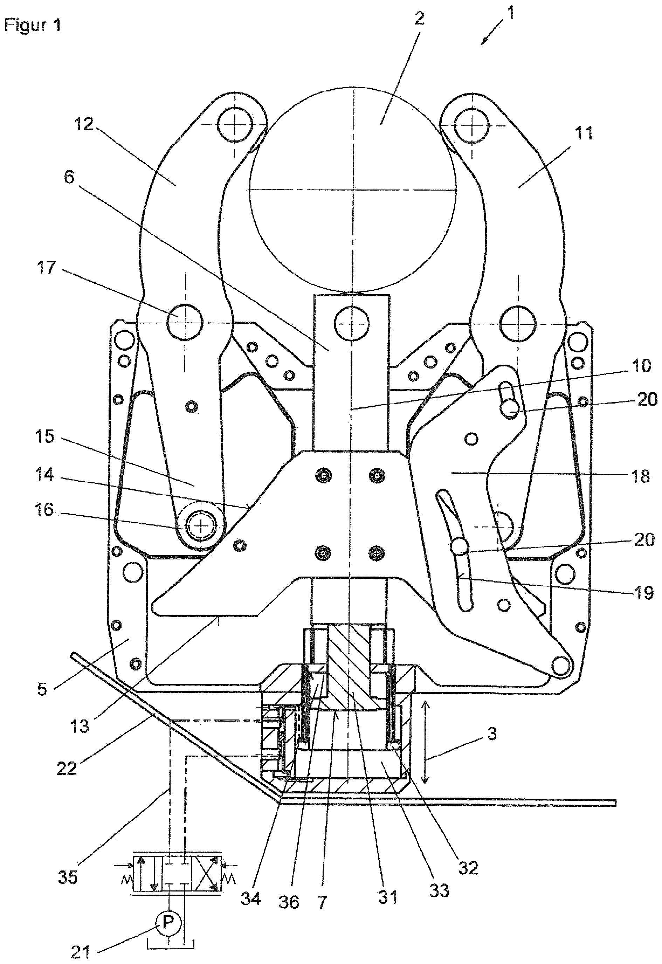

Aus Figur 1 ist eine Lünette 1 zu entnehmen, durch die ein Werkstück 2 im Raum zentrisch abzustützen oder zu halten ist, so dass die Längsachse des Werkstückes 2 möglichst geradlinig, also ohne durchzubiegen und fluchtend zu der Längsachse der Werkzeugmaschine, verläuft. Bei den Werkstücken 2 handelt es sich um rotationssymmetrische Wellen oder Hohlkörper, die von einer schematisch dargestellten Werkzeugmaschine bearbeitet werden. Das Werkzeugbett der Werkzeugmaschine ist mit der Bezugsziffer 22 versehen. Oftmals übt die Werkzeugmaschine erhebliche Bearbeitungskräfte auf das Werkstück 2 aus, die von der Lünette 1 aufzunehmen sind, ohne dass die Längsachse des Werkstückes 2 verschoben ist, denn dadurch sind die präzisen Bearbeitungsschritte nicht durchführbar.

Die Lünette 1 besteht aus zwei Gehäuseschalen 4 und 5 die beabstandet zueinander angeordnet sind und einen Raum einschießen. Die Gehäuseschalen 4 und 5 sind fest miteinander verbunden. Desweiteren bilden die Gehäuseschalen 4 und 5 eine Längsachse 10, die senkrecht zu der Rotationsachse des Werkstückes 2 auszurichten ist, um eine zuverlässige Befestigung der Lünette 1 an dem Werkstück 2 zu erreichen.

Darüberhinaus besteht die Lünette 1 aus einem Betätigungskolben 7 der beispielsweise pneumatisch oder hydraulisch mit einem Druckmedium beaufschlagt ist und der fluchtend zu der Längsachse 10 der Gehäuseschalen 4, 5 verläuft. Durch den Betätigungskolben 7 wird eine axiale Hubbewegung erzeugt, die in Richtung des Werkstückes 2 oder von diesem weg ausgerichtet ist und die mit der Bezugsziffer 3 in den Figuren gekennzeichnet ist.

An dem Betätigungskolben 7 ist ein mittlerer Lünettenarm 6 befestigt, der somit in trieblicher Wirkverbindung mit den Betätigungskolben 7 steht und von diesen in Bewegungsrichtung 3 axial in Richtung des Werkstückes 2 oder von diesem wegbewegbar ist. Der mittlere Lünettenarm 6 bildet demnach eine erste Auflage für das Werkstück 2.

Zwei weitere von dem mittleren Lünettenarm 6 notwendigen Auflager werden durch zwei äußere Lünettenarme 11, 12 gebildet, die mittels eines Gelenkes 17 drehbar oder verschwenkbar an den Gehäuseschalen 4 und 5 gelagert sind.

Um die beiden äußeren Lünettenarme 11, 12 synchron mit dem mittleren Lünettenarm 6 zu bewegen, ist an dem Betätigungskolben 7 ein Führungsschlitten 13 angebracht, der eine dachförmige oder V-förmige Außenkontur aufweist, wobei die Spitze des Daches oder des V benachbart zu dem Werkstück 2 angeordnet ist und die Seitenflächen des Führungsschlittens 13 bezogen auf die Längsachse 10 ansteigen.

Die gegenüberliegenden Außenflanken des Führungsschlittens 13 sind als Steuerbahn 14 ausgestaltet, auf denen jeweils an den freien Enden 15 der äußeren Lünettenarmen 11, 12 angebrachte Laufrollen 16 abrollen und permanent anliegen, wie dies nachfolgend näher erläutert ist.

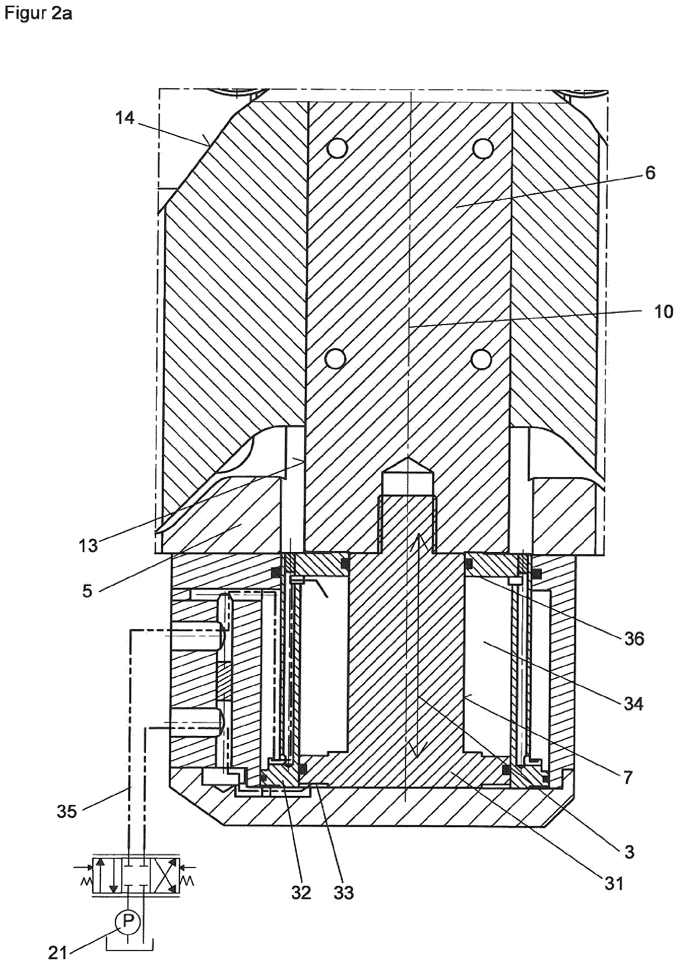

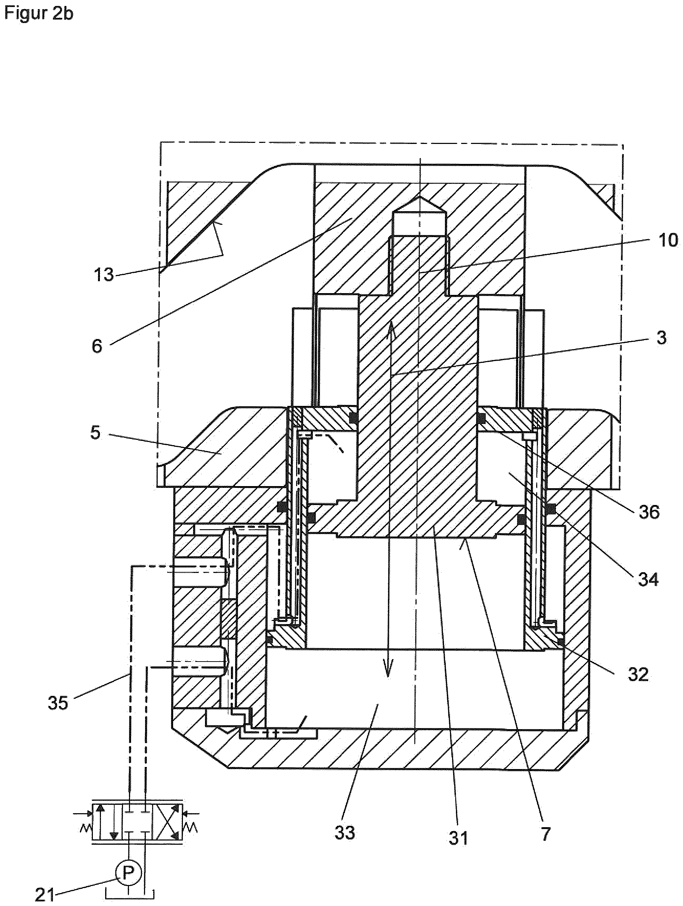

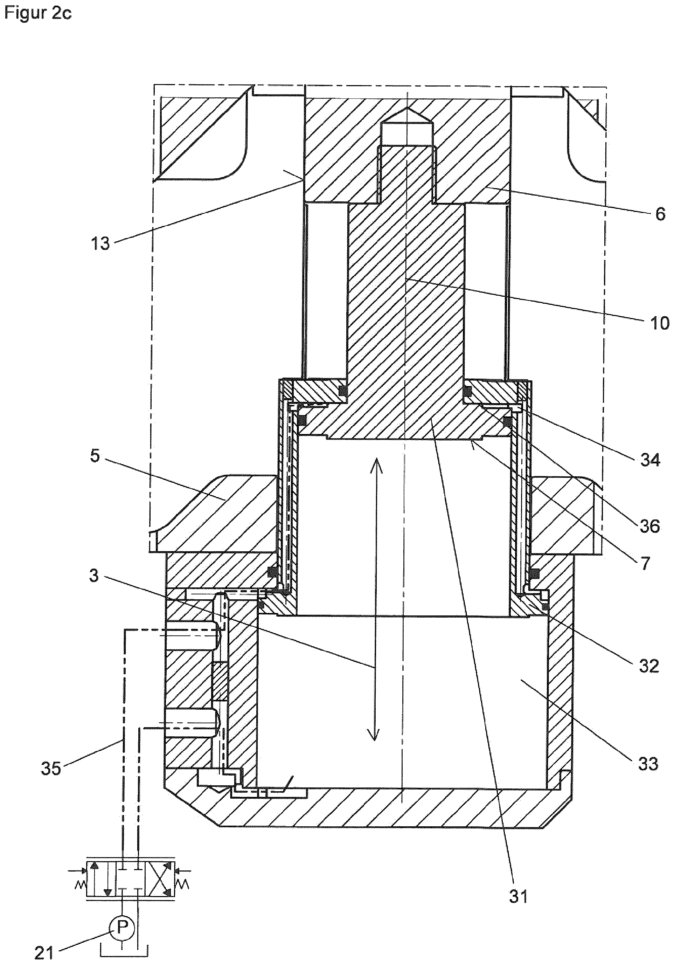

Aus Figur 2a ist ersichtlich, dass ein Werkstück 2 mit einem groß bemessenen Durchmesser, beispielsweise von 600 mm eingespannt ist, so dass durch die Größe des Werkstückes 2 die Position des Führungsschlittens 13 in den Gehäuseschalen 4 und 5 vorgegeben ist, denn je kleiner der Durchmesser der einzuspannenden Werkstücke 2 ausfällt, wie dies in den Figuren 2b und 2c schematisch abgebildet ist, ändert sich die Position des Führungsschlittens 13 in den Gehäuseschalen 4 und 5.

In den Figuren 2a, 2b und 2c ist zudem zu entnehmen, dass der Betätigungskolben 7 teleskopartig ausgestaltet ist. Somit besteht der Betätigungskolben 7 aus einem ersten Zustellkolben 31 und einem zweiten Zustellkolben 32, die relativ zueinander beweglich sind, denn jeder Zustellkolben 31 bzw. 32 des Betätigungskolbens 7 ist einem voneinander räumlich getrennten Druckraum 33 bzw. 34 zugeordnet. In jeden der beiden Druckräume 33 und 34 münden Leitungen 35 ein, die über eine Steuereinrichtung bzw. eine Pumpe 21 mit einem Druckmedium, beispielsweise Hydrauliköl, befüllbar oder entleerbar sind.

Sobald demnach in den ersten Druckraum 33 Hydrauliköl durch die Pumpe 21 eingepresst ist, bewegt sich der erste Zustellkolben 31 des Betätigungskolbens 7 gemäß Figur 2a aus der Ausgangsposition in eine erste Zustellposition in Richtung des Werkstückes 2 und verfährt gleichzeitig den zweiten Zustellkolben 32. Der im Druckraum 33 vorgesehene Verstellweg oder Hubweg des ersten Zustellkolbens 31 des Betätigungskolbens 7 gemäß Figur 2b ist durch einen Anschlag 36 begrenzt. Sobald daher die Endposition des ersten Zustellkolbens 31 des Betätigungskolbens 7 an dem Anschlag 36 erreicht ist, wird in den zweiten Druckraum 34 Hydrauliköl eingepresst, so dass sich der zweite Zustellkolben 32 des Betätigungskolbens 7 gemäß Figur 2a in Richtung des Werkstückes 2 bewegt, wodurch sowohl der noch möglicherweise zu überbrückende Betätigungsweg der Lünettenarme 6, 11 und 12 überbrückt ist und zum anderen die notwendige Spannkraft auf die drei Lünettenarme 6, 11 und 12 erzeugt ist.

Aufgrund der teleskopartigen Ausbildung des Betätigungskolbens 7 ist der für diesen erforderliche Bauraum erheblich verringert unter Beibehaltung der notwendigen Länge des Hubweges und des von einem Maschinenbett 22 einer Werkzeugmaschine begrenzte Bauraum optional ausgerichtet.

Der teleskopartig ausgestaltete Betätigungskolben 7 besteht bekanntermaßen aus einem ersten und zweiten Teil 31 und 32. Der zweite Teil 32 des Betätigungskolbens 7 taucht zumindest teilweise in die das Lünettengehäuse bildenden Gehäuseschalen 4, 5 ein, so dass die Länge des Betätigungskolbens 7 teilweise in den Gehäuseschalen 4, 5 untergebracht ist. Somit ist die Länge des Betätigungskolbens 7 reduziert.

## Patentansprüche

1. Lünette (1) zur Zentrierung eines rotationssymmetrischen Werkstückes (2) im Raum,
bestehend aus:
- zwei zueinander beabstandet angeordneten und fest miteinander verbundenen Gehäuseschalen (4, 5),
- einem zwischen den beiden Gehäuseschalen (4, 5) angeordneten mittleren Lünettenarm (6), der mittels eines Betätigungskolbens (7) in axialer Bewegungsrichtung (3) auf das Werkstück (2) verschiebbar in den Gehäuseschaltern (4, 5) gelagert ist, und
- zwei äußeren Lünettenarmen (11, 12), die mit dem mittleren Lünettenarm (6) trieblich verbunden sind, und durch den Betätigungskolben (7) die drei Lünettenarme (6, 11, 12) synchron bewegt sind,
**dadurch gekennzeichnet,**
**dass** der Betätigungskolben (7) aus mindestens einem ersten Zustellkolben (31) und einem zweiten Zustellkolben (32) gebildet ist, die teleskopartig zueinander und relativ zueinander axial verschiebbar gelagert sind, dass jedem Zustellkolben (31, 32) des Betätigungskolbens (7) ein Druckraum (33) bzw. (34) zugeordnet ist und dass in jeden Druckraum (33, 34) eine Leitung (35) mündet, durch die ein Druckmedium in den jeweiligen Druckraum (33 bzw. 34) einpressbar bzw. aussaugbar ist.

2. Lünette nach Anspruch 1,
**dadurch gekennzeichnet,**
**dass** die beiden Druckräume (33, 34) räumlich voneinander getrennt sind und unabhängig voneinander mit dem Druckmedium befüllbar bzw. entleerbar sind.

3. Lünette nach Anspruch 1 oder 2,
**dadurch gekennzeichnet,**
**dass** in dem ersten Druckraum (33) ein Anschlag (36) vorgesehen ist, durch den der Hubweg des ersten Zustellkolbens (31) des Betätigungskolbens (7) begrenzt ist.

4. Lünette nach einem der vorgenannten Ansprüche,
**dadurch gekennzeichnet,**
**dass** in dem zweiten Druckraum (34) ein Anschlag (37) vorgesehen ist, durch den Hubweg des zweiten Zustellkolbens (32) des Betätigungskolbens (7) begrenzt ist.

5. Lünette nach einem der vorgenannten Ansprüche,
**dadurch gekennzeichnet,**
**dass** die jeweilige Leitung (35) an eine Steuereinrichtung, vorzugsweise eine Pumpe 21, angeschlossen ist, durch die jede der Leitungen (35) unabhängig voneinander mit dem Druckmedium befüllbar bzw. entleerbar ist.

6. Lünette nach einem der vorgenannten Ansprüche,
**dadurch gekennzeichnet,**
**dass** der Betätigungskolben (7) zumindest teilweise innerhalb der Gehäuseschalen (4, 5) angeordnet ist und dass beim Betätigen des Betätigungskolbens (7) der zweite Teil (32) des Betätigungskolbens (7) in die Gehäuseschalen (4, 5) eintauchen.

## Claims

1. A stationary support (1) for centring a rotationally symmetrical workpiece (2) in the space,
consisting of:
- two housing shells (4, 5) arranged at a distance from one another and firmly connected together,
- a middle stationary support arm (6) arranged between the two housing shells (4, 5) that is mounted in the housing shells (4, 5) by means of an actuation piston (7) so as to be moved in an axial direction (3) towards the workpiece (2), and
- two outer stationary support arms (11, 12) that are in a driving connection with the middle stationary support arm (6), and the actuation piston (7) moves the three stationary support arms (6, 11, 12) synchronously,
**characterised in that,**
the actuation piston (7) is formed from at least one first advance piston (31) and one second advance piston (32) that are mounted in an axially moving telescopic relationship with one another, that a pressure space (33) or (34) is assigned to each advance piston (31, 32) of the actuation piston (7) and that a line (35) emerges in each pressure space (33, 34) through which a pressurised medium can be pressed into the particular pressure space (33 or 34) or drawn out of it.

2. The stationary support in accordance with Claim 1,
**characterised in that,**
the two pressure spaces (33, 34) are spatially separated from one another and can be filled with the pressurised medium or drained independently from one another.

3. The stationary support in accordance with Claim 1 or 2,
**characterised in that,**
a stop (36) is provided in the first pressure space (33) by means of which the stroke travel of the first advance piston (31) of the actuation piston (7) is limited.

4. The stationary support in accordance with one of the aforementioned claims,
**characterised in that,**
a stop (37) is provided in the second pressure space (34) by means of which the stroke travel of the second advance piston (32) of the actuation piston (7) is limited.

5. The stationary support in accordance with one of the aforementioned claims,
**characterised in that,**
the particular line (35) is connected to a control device, preferably a pump (21), by means of which each of the lines (35) can be filled with the pressurised fluid or drained independently from one another.

6. The stationary support in accordance with one of the aforementioned claims,
**characterised in that,**
the actuation piston (7) is arranged at least in part within the housing shells (4, 5) and that when the actuation piston (7) is actuated, the second part (32) of the actuation piston (7) plunges into the housing shells (4, 5).

## Revendications

1. Lunette (1) pour le centrage d'une pièce à usiner à symétrie de rotation (2) dans l'espace,
comprenant :
- deux boîtiers (4, 5) espacés entre eux et rigidement liés ensemble,
- un bras de lunette central (6) disposé entre les deux boîtiers (4, 5) qui, moyennant un piston d'actionnement (7), se laisse déplacer dans le sens axial (3) dans les deux boîtiers (4, 5) en direction de la pièce à usiner (2),
- deux bras de lunette extérieurs (11, 12) liées par entraînement avec le bras de lunette central (6), où, moyennant le piston d'actionnement (7), les trois bras de lunette (6, 11, 12) se laissent déplacer de manière synchrone,
**caractérisée en ce que**
le piston d'actionnement (7) est constitué d'au moins un premier piston d'avance (31) et un deuxième piston d'avance (32) logés de manière télescopique l'un dans l'autre et se laissant déplacer axialement l'un relativement à l'autre, qu'à chaque piston d'avance (31, 32) du piston d'actionnement (7), il est assigné une chambre de pression (33) ou (34) et que dans chaque chambre de pression (33, 34), il aboutit une conduite (35) qui permet de presser un milieu de pression dans la chambre de pression respective (33 ou 34), ou de l'aspirer hors de la chambre.

2. Lunette d'après la revendication 1,
**caractérisée en ce que**
les deux chambres de pression (33, 34) sont séparées l'une de l'autre et qu'elles se laissent remplir indépendamment avec le milieu de pression, ou se laisser vider.

3. Lunette d'après une des revendications 1 ou 2,
**caractérisée en ce que**
dans la première chambre de pression (33), il est prévu une butée (36) limitant la course du premier piston d'avance (31) du piston d'actionnement (7).

4. Lunette d'après une des revendications précédentes,
**caractérisée en ce que**
dans la deuxième chambre de pression (34), il est prévu une butée (37) limitant la course du deuxième piston d'avance (32) du piston d'actionnement (7).

5. Lunette d'après une des revendications précédentes,
**caractérisée en ce que**
la conduite respective (35) est raccordée à un équipement de commande, de préférence une pompe 21, qui permet de remplir indépendamment chacune des conduites (35) avec le milieu de pression, ou de la vider.

6. Lunette d'après une des revendications précédentes,
**caractérisée en ce que**
le piston d'actionnement (7) est disposé du moins partiellement à l'intérieur des boîtiers (4, 5) et qu'à l'action du piston d'actionnement (7), la deuxième partie (32) du piston d'actionnement (7) s'immerge dans les boîtiers (4, 5).
